# FASCICULE DE BREVET EUROPEEN

(11) **EP 2 972 045 B1**
(45) Date de publication et mention de la délivrance du brevet: **16.01.2019**
(21) Numéro de dépôt: 14718730.6
(22) Date de dépôt: 14.03.2014
(51) Int. Cl.: F28D 21/00

(54) **APPAREIL THERMIQUE**
THERMISCHE VORRICHTUNG
THERMAL APPARATUS

(30) Priorité: 14.03.2013 FR 1352271
(43) Date de publication de la demande: 20.01.2016
(73) Titulaire: Cooltech Applications S.A.S., 67810 Holtzheim (FR)
(72) Inventeur: MULLER, Christian, F-67000 Strasbourg (FR)
(74) Mandataire: Koelbel, Caroline
(86) Numéro de dépôt international: PCT/IB2014/000344
(87) Numéro de publication internationale: WO 2014/140762

(56) Documents cités:
- WO-A2-2009/087310
- FR-A- 997 056
- FR-A1- 2 919 687
- FR-A1- 2 943 407
- US-A- 4 107 935
- US-A- 4 727 721
- US-A- 5 249 424
- US-A1- 2009 178 418
- US-A1- 2009 308 079
- GAO Q ET AL: "Experimental investigation on refrigeration performance of a reciprocating active magnetic regenerator of room temperature magnetic refrigeration", INTERNATIONAL JOURNAL OF REFRIGERATION, ELSEVIER, PARIS, FR, vol. 29, no. 8, 1 décembre 2006 (2006-12-01), pages 1274-1285, XP027948435, ISSN: 0140-7007 [extrait le 2006-12-01]

## Description

### Domaine technique :

La présente invention concerne un appareil thermique comportant un coeur d'appareil dans lequel est produite l'énergie thermique et comportant au moins un circuit primaire dans lequel circule un fluide caloporteur dit fluide primaire, ledit fluide primaire étant déplacé dans l'appareil par un dispositif d'entraînement selon un mouvement alterné, et au moins une interface d'échange thermique du fluide primaire avec un fluide secondaire circulant de manière unidirectionnelle dans un circuit secondaire, ledit circuit primaire étant divisé en au moins deux portions de circuit primaire unidirectionnel au niveau de points de division situés en sortie dudit coeur de l'appareil thermique, lesdites au moins deux portions de circuit primaire unidirectionnel étant munies d'un dispositif de contrôle du sens de circulation du fluide primaire paramétré pour y forcer le déplacement unidirectionnel dudit fluide primaire de sorte, qu'à chaque changement de sens de circulation du fluide primaire, ce dernier est déplacé soit dans une portion de circuit primaire unidirectionnel, soit dans l'autre portion correspondante, chaque portion de circuit primaire unidirectionnel étant délimitée par deux points de division et ladite interface étant disposée entre ces deux points de division.

### Technique antérieure :

Un appareil thermique doit pouvoir échanger l'énergie thermique qu'il produit avec une application extérieure. Un tel échange est réalisé habituellement par un échangeur thermique conçu de préférence pour réaliser un échange thermique optimal. Des exemples sont illustrés dans les publications US 2009/0178418 A1 et US 2009/0308079 A1 dans lesquels le fluide primaire est déplacé dans un seul sens de circulation. Dans le cas d'appareils thermiques dont le fluide primaire, c'est-à-dire le fluide caloporteur qui transporte l'énergie thermique produite par l'appareil thermique, est déplacé selon un mouvement alternatif ou alterné, l'efficacité de l'échange thermique entre le fluide primaire et le fluide de l'application extérieure ou fluide secondaire est problématique à cause du changement de sens de circulation du fluide primaire qui entraîne un échange thermique tantôt contre-courant, tantôt co-courant et de ce fait non optimisé.

Au sens de la présente invention, un déplacement alterné ou alternatif correspond à un déplacement avec un changement de sens de circulation régulier, c'est-à-dire avec des allers-retours. Cela est particulièrement le cas dans les appareils thermiques magnétocaloriques dans lesquels le fluide primaire est déplacé selon un mouvement de va et vient à travers du matériau magnétocalorique pour y établir un gradient thermique, comme illustré et décrit dans la publication FR 997 056 A qui correspond au préambule de la revendication 1.

Ces appareils thermiques exploitent l'effet magnétocalorique (EMC) de certains matériaux, qui consiste en une variation de leur température lorsqu'ils sont soumis à un champ magnétique. Dans de tels appareils, les matériaux magnétocaloriques sont soumis à une succession de phases d'aimantation et de désaimantation et un échange thermique avec un fluide caloporteur primaire est réalisé pour parvenir à une variation de température la plus élargie possible dans ces matériaux (gradient de température). Pour ce faire, la circulation du fluide primaire est alternée et ce fluide primaire circule dans des canaux ou des pores traversant le matériau magnétocalorique. Un cycle magnétocalorique comprend une phase de magnétisation et une phase de démagnétisation, qui se traduit par une énergie disponible à chaque phase. Ce cycle est répété jusqu'à des fréquences de plusieurs Hertz. Pendant ces phases magnétiques, le matériau est parcouru par le fluide primaire qui va, soit se réchauffer au contact du matériau lors d'une phase dite de magnétisation, soit se refroidir au contact du matériau lors d'une phase dite de démagnétisation.

De ce fait, dans les appareils thermiques à flux primaire alterné, l'échange thermique avec le fluide secondaire est fortement dépendant de la fréquence des changements de sens de circulation, ainsi que de la température du fluide primaire. Ce phénomène est amplifié dans les appareils thermiques magnétocaloriques dans lesquels le fluide caloporteur déplacé échange thermiquement soit avec un matériau magnétocalorique ayant subi un échauffement, soit avec un matériau magnétocalorique ayant subi un refroidissement. Etant donné que le fluide primaire effectue des allers-retours, sa température est moyennée dans le ou les échangeurs et entraîne inévitablement une perte d'efficacité de l'appareil thermique.

De plus, quand la fréquence des changements d'aimantation et de sens de circulation du fluide primaire augmente, la puissance thermique (par exemple : le refroidissement) susceptible d'être délivrée par l'appareil thermique magnétocalorique augmente également. Or, cette augmentation de fréquence a un effet négatif sur l'échange thermique entre le fluide primaire et le fluide secondaire en diminuant le temps d'échange. Il en ressort une diminution du rendement de l'appareil thermique.

Pour exploiter la puissance d'un appareil thermique, il est donc nécessaire d'avoir des caractéristiques d'échanges thermiques entre le circuit primaire et le circuit secondaire qui soient améliorées, optimisées et les plus longues et les plus constantes possibles. Comme expliqué, la maîtrise des échanges thermiques du circuit primaire d'un appareil thermique avec un circuit secondaire est problématique dans le cadre d'un circuit primaire utilisant un déplacement séquentiel alterné et discontinu du fluide primaire.

### Exposé de l'invention :

La présente invention vise à pallier ces inconvénients en proposant une solution aux problèmes évoqués ci-dessus au moyen d'un appareil thermique réalisé de telle sorte que le transfert d'énergie thermique entre le fluide primaire et la ou les applications extérieures est optimisé.

Dans ce but, l'invention concerne un appareil thermique du genre indiqué en préambule, caractérisé en ce que ladite interface comporte au moins une zone d'échange thermique dans laquelle le fluide primaire et le fluide secondaire se déplacent de manière unidirectionnelle et à contre-courant l'un par rapport à l'autre, et en ce que ladite zone d'échange thermique comporte au moins une portion commune de circuit primaire unidirectionnel dans laquelle se rejoignent lesdites au moins deux portions de circuit primaire unidirectionnel, de sorte que le fluide primaire circule dans ladite au moins une portion commune de manière continue et unidirectionnelle à chaque itération.

Le fait de prévoir des zones d'échange thermique dans lesquelles les fluides devant échanger thermiquement, à savoir le fluide primaire et le fluide secondaire, se déplacent dans deux sens opposés ou à contre-courant, permet de réaliser un meilleur transfert d'énergie dans lesdites zones d'échange et ainsi de mieux faire converger les températures des fluides primaire et secondaire.

Selon l'invention, ledit dispositif d'entraînement peut être intégré dans la partie dudit circuit primaire dans laquelle le fluide se déplace alternativement dans deux sens opposés.

A cet effet, ledit dispositif d'entraînement peut être intégré dans le coeur dudit appareil thermique.

Le paramétrage peut être réalisé par un dispositif de contrôle du type clapet anti-retour ou tout autre dispositif analogue réalisant la même fonction, à savoir laissant passer le fluide dans un sens unique, tel que par exemple des valves hydrauliques commandées électriquement ou par un différentiel de pression.

Une au moins des zones d'échange de ladite interface comporte avantageusement au moins une desdites portions de circuit primaire unidirectionnel. En fonction du nombre de portions de circuit primaire unidirectionnel présent dans une zone d'échange de l'interface, il est ainsi avantageusement possible de moduler la quantité d'énergie thermique susceptible d'être échangée.

De préférence, ledit circuit primaire peut être ainsi divisé en au moins deux portions de circuit primaire unidirectionnel.

L'appareil thermique selon l'invention peut en outre comporter un élément magnétocalorique traversé de part en part par ledit fluide primaire et formant ledit coeur dudit appareil, et un arrangement magnétique mis en mouvement pour soumettre alternativement ledit élément magnétocalorique à une variation de champ magnétique et créer alternativement dans ledit élément magnétocalorique, une phase d'échauffement et une phase de refroidissement.

De préférence, lesdits points de division peuvent être positionnés au niveau de la zone de sortie du fluide primaire dudit élément magnétocalorique.

### Description sommaire des dessins :

La présente invention et ses avantages apparaîtront mieux dans la description suivante de plusieurs variantes de réalisation données à titre d'exemples non limitatifs, en référence aux dessins annexés, dans lesquels:
- la figure 1 est une vue schématique d'un appareil thermique selon une première variante de réalisation,
- la figure 2 est une vue schématique d'un appareil thermique selon une seconde variante de réalisation,
- la figure 3 est une vue schématique d'un appareil thermique selon une troisième variante de réalisation, correspondant à l'invention,
- la figure 4 est une vue schématique d'un appareil thermique selon une quatrième variante de réalisation,
- la figure 5 est une vue schématique d'un appareil thermique selon une cinquième variante de réalisation,
- la figure 6 est une représentation schématique d'un côté froid d'un appareil thermique selon une sixième variante de réalisation,
- la figure 7 est une représentation schématique d'un côté froid d'un appareil thermique selon une septième variante de réalisation, et
- la figure 8 est une représentation schématique d'un côté froid d'un appareil thermique selon une huitième variante de réalisation.

### Illustrations de l'invention et différentes manières de la réaliser :

Dans les exemples de réalisation illustrés, les éléments ou parties identiques portent les mêmes références numériques.

L'invention n'est pas limitée à un type particulier d'appareil thermique. Elle se rapporte à tout appareil thermique comportant un fluide caloporteur ou fluide primaire en déplacement selon un mouvement alterné destiné à transporter de l'énergie thermique de l'appareil et à la transférer par un échange thermique à un autre fluide caloporteur dit fluide secondaire dont le déplacement est unidirectionnel. De préférence, le fluide primaire et le fluide secondaire sont des liquides. De plus, le fluide secondaire est de préférence déplacé de manière continue par une pompe ou tout autre dispositif analogue.

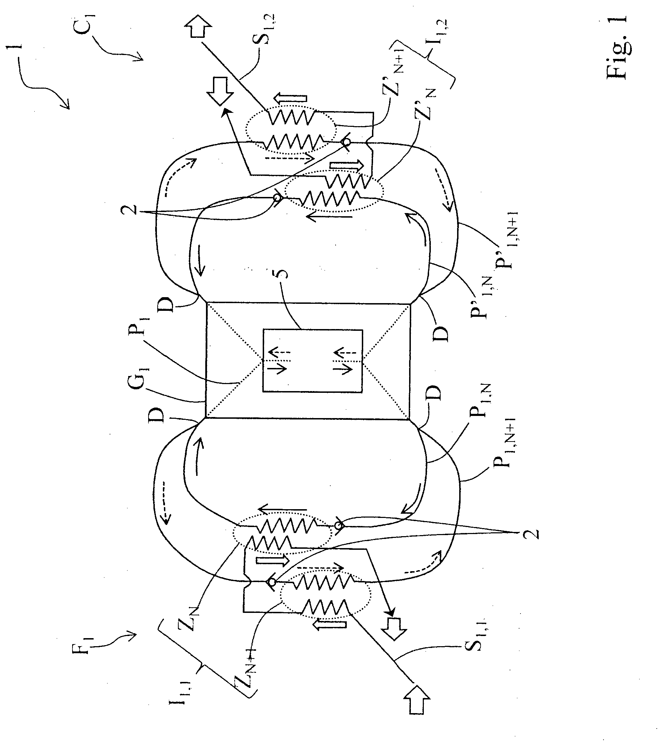

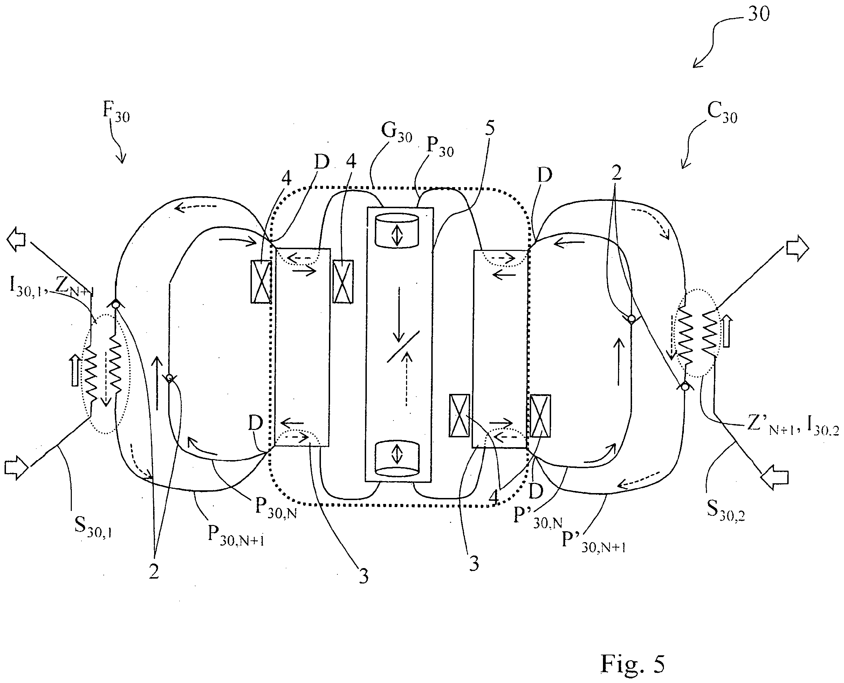

Les appareils thermiques 1, 10, 20, 30, 40, 50, 60, 70 représentés comportent un coeur d'appareil référencé G₁, G₁₀, G₂₀, G₃₀, G₄₀, G₅₀, G₆₀, G₇₀ comportant un ou plusieurs circuits primaires P₁, P₁₀, P_{10'}, P₂₀, P₃₀, P₄₀, P₅₀, P_{50'}, P₆₀, P_{60'}, P₇₀ dans lesquels un fluide caloporteur dit fluide primaire circule selon un déplacement alternatif ou bidirectionnel. C'est dans le coeur G₁, G₁₀, G₂₀, G₃₀, G₄₀, G₅₀, G₆₀, G₇₀ de l'appareil que l'énergie thermique est produite. Le fluide primaire effectue des allers-retours constants dans deux sens opposés de circulation dans le circuit primaire P₁, P₁₀, P_{10'}, P₂₀, P₃₀, P₄₀, P₅₀, P_{50'}, P₆₀, P_{60'}, P₇₀. Ce déplacement de va-et-vient peut être obtenu par exemple par le piston d'un vérin à double effet formant un dispositif d'entraînement 5 du fluide primaire. Bien entendu, tout autre moyen apte à déplacer le fluide primaire peut être utilisé, telle qu'une membrane, par exemple. En outre, le déplacement du piston ou similaire peut être commandé par un dispositif de manoeuvre pouvant être une came, un dispositif magnétique, un moteur linéaire ou tout autre moyen équivalent apte à déplacer ledit piston selon un mouvement de va-et-vient. De préférence, et comme cela est représenté dans les figures annexées, et plus particulièrement dans les figures 1 et 5. ce dispositif d'entraînement 5 est situé dans le coeur de l'appareil thermique 1. 10, 20. 30. 40, 50. 60. 70, à savoir dans la partie du circuit primaire dans laquelle le fluide se déplace de manière bidirectionnelle. Cela permet, d'une part. grâce à la proximité du dispositif d'entraînement, de diminuer les pertes de charge dans le coeur de l'appareil thermique 1, 10, 20, 30, 40. 50. 60, 70 où est produite l'énergie, et donc d'augmenter l'efficacité de l'appareil thermique 1, 10, 20, 30, 40, 50, 60, 70. D'autre part, cela permet également d'améliorer la compacité de l'appareil thermique 1, 10, 20, 30, 40, 50, 60, 70. Un dispositif d'entraînement 5 peut comprendre une came d'entraînement associée à des pistons rigides ou souples telles que des membranes. Une configuration telle que celle divulguée dans la publication WO 2009/087310 de la demanderesse peut, par exemple, être utilisée.

Dans le schéma de la figure 1, ainsi que dans les autres schémas, le circuit primaire P₁, P₁₀, P_{10'}, P₂₀, P₃₀, P₄₀, P₅₀, P_{50'}, P₆₀, P_{60'}, P₇₀ est représenté très schématiquement. - Il peut notamment comporter d'autres éléments non illustrés tels que par exemple des joints, des canaux, des systèmes de diffusion du fluide, etc. En outre, dans les figures annexées, le circuit primaire P₁, P₁₀, P_{10'}, P₂₀, P₃₀, P₄₀, P₅₀, P_{50'}, P₆₀, P_{60'}, P₇₀ est représenté à chaque fois fermé sur lui-même, c'est-à-dire formant une boucle. L'invention n'est toutefois pas limitée à cette configuration, et le circuit primaire P₁, P₁₀, P_{10'}, P₂₀, P₃₀, P₄₀, P₅₀, P_{50'}, P₆₀, P_{60'}, P₇₀ peut ne pas se refermer sur lui-même. De plus, l'appareil thermique selon l'invention peut comporter plusieurs circuits primaires, de configuration différente ou identique. De préférence, le circuit primaire P₁, P₁₀, P_{10'}, P₂₀, P₃₀, P₄₀, P₅₀, P_{50'}, P₆₀, P_{60'}, P₇₀ est fermé et à volume constant.

Les flèches des figures 1 à 8 illustrent le sens de circulation du fluide primaire et du fluide secondaire dans les appareils thermiques 1, 10, 20, 30, 40. 50, 60, 60.

Ainsi, en référence à l'appareil thermique 1 représenté dans la figure 1, le circuit primaire P₁ comprend plusieurs portions P_{1,N}, P_{1,N+1}. P'_{1,N}, P'_{1,N+1} de circuit primaire unidirectionnel. Cet appareil thermique 1 comporte un côté chaud C₁ situé à droite sur la figure muni de deux portions P'_{1,N}. P'_{1,+1} de circuit primaire unidirectionnel et un côté froid F₁ situé à gauche sur la figure et comportant deux autres portions P_{1,N}, P_{1,N+1} de circuit primaire unidirectionnel. Les portions P_{1,N}, P_{1,N+1}, P'_{1,N}, P'_{1,N+1} de circuit primaire unidirectionnel comportent chacune un dispositif 2 de contrôle du sens de circulation du fluide primaire. Ces dispositifs 2 peuvent être des clapets anti-retour, par exemple.

L'appareil thermique 1 comporte, au niveau du côté froid F₁, une interface d'échange I_{1,1} formée par un échangeur thermique dont les circuits d'échange intègrent une partie du circuit secondaire S_{1,1} dans lequel circule un fluide secondaire et des portions P_{1,N}, P_{1,N+1} de circuit primaire unidirectionnel. L'appareil thermique 1 comporte des zones d'échange thermique Z_{N}, Z_{N+1}, Z'_{N}, Z'_{N+1} dans lesquelles les fluides primaire et secondaire s'écoulent longitudinalement l'un part rapport à l'autre. De même, au niveau du côté chaud Ci, l'appareil thermique 1 comporte une interface d'échange I_{1,2} formée par un échangeur thermique dont les circuits d'échange intègrent une partie du circuit secondaire S_{1,2} dans lequel circule un fluide secondaire et des portions P'_{1,N}, P'_{1,N+1} de circuit primaire unidirectionnel. L'invention ne préjuge pas de la configuration structurelle de ces échangeurs thermiques I_{1,1,} I_{1,2} qui peuvent être des échangeurs à plaques, tubulaires ou tout autre type d'échangeurs thermiques. Toutefois, les portions P_{1,N}, P_{1,N+1}, P'_{1,N}, P'_{1,N+1} de circuit primaire unidirectionnel et les parties du circuit secondaire S_{1,1}, S_{1,2} doivent être connectées à l'échangeur thermique respectif de sorte que les fluides primaire et secondaire y circulent à contre-courant. Cela est possible grâce à l'invention, et plus particulièrement grâce à la division du circuit primaire P₁ de l'appareil thermique 1 en au moins deux portions de circuit comportant chacune un dispositif de contrôle 2 du sens de circulation du fluide primaire imposant un sens de circulation opposé dans les deux portions de circuit. Il en ressort que l'on obtient dans chacune desdites portions de circuit primaire unidirectionnel le déplacement du fluide primaire de manière unidirectionnelle. Cela rend alors possible un échange à contre-courant avec un fluide secondaire se déplaçant également de manière unidirectionnelle et permet d'augmenter la capacité d'échange thermique entre le circuit primaire et le circuit secondaire. Cette explication est applicable dans tous les exemples illustrés dans la présente demande.

Les portions P_{1,N}, P_{1,N+1}, P'_{1,N}, P'_{1,N+1} de circuit primaire unidirectionnel sont associées par paires de portions, dans lesquelles le sens de circulation du fluide primaire est opposé. De cette manière, le fluide primaire se déplace dans un sens unique dans les portions P_{1,N} et P'_{1,N} et dans le sens unique inversé dans les portions P_{1,N+1}, P'_{1,N+1}, à l'itération suivante. Dans le reste du circuit primaire P₁, le déplacement du fluide primaire est alterné selon un mouvement de va-et-vient dans les deux sens de circulation. Grâce à l'invention, un tel redressement de la circulation du fluide primaire dans les portions P_{1,N}, P_{1,N+1}, P'_{1,N}, P'_{1,N+1} de circuit primaire unidirectionnel permet de réaliser très facilement un échange thermique à contre-courant avec un fluide secondaire circulant de manière unidirectionnelle et continue dans un circuit secondaire S_{1,1}, S_{1,2}. Comme déjà indiqué, cet échange thermique à contre-courant est réalisé selon l'invention dans des zones Z_{N}, Z_{N+1}. Z'_{N}, Z'_{N+1} d'échange thermique qui comportent ou intègrent une partie des portions P_{1,N}, P_{1,N+1}, P'_{1,N}, P'_{1,N+1}. Ces zones Z_{N}, Z_{N+1}, Z'_{N}, Z'_{N+1} d'échange thermique peuvent être matérialisées par des échangeurs thermiques tels que des échangeurs à plaques ou des échangeurs tubulaires, par exemple, dans lesquels circulent le fluide primaire et le fluide secondaire dans deux directions opposées. En outre, et cela est transposable dans toutes les variantes illustrées, les zones d'échange thermique peuvent être isolées thermiquement les unes des autres dans une même interface par l'interposition d'une feuille ou couche thermiquement isolante, par exemple.

A chaque itération ou changement de sens de circulation du fluide primaire, ce dernier est déplacé soit dans une portion P_{1,N}, P'_{1,N} de circuit primaire unidirectionnel, soit dans l'autre portion P_{1,N+1}, P'_{1,N+1}. De ce fait, tout le fluide primaire, c'est-à-dire aussi bien le fluide primaire venant d'une itération que de l'autre, peut échanger thermiquement avec le fluide secondaire circulant à contre-courant. Cela est valable pour tous les appareils thermiques de la présente demande comportant une zone d'échange thermique au niveau de chaque portion P_{1,N,} P_{1,N+1}, P'_{1,N}, P'_{1,N+1} de circuit primaire unidirectionnel.

Ainsi, grâce à l'invention, l'échange thermique entre un fluide primaire issu d'un appareil thermique dans lequel il est déplacé de manière séquentielle alternativement dans deux sens opposés et un fluide secondaire circulant dans une seule direction, est optimisé dans les zones d'échange thermique Z_{N}, Z_{N+1}, Z'_{N}, Z'_{N+1}, Z_{N,N+1}, Z'_{N,N+1}, dans lesquelles le fluide primaire est redressé et circule dans un seul sens de circulation, à contre-courant par rapport au fluide secondaire. En outre, le fait d'augmenter le nombre de zones d'échange thermique Z_{N}, Z_{N+1}, Z'_{N}, Z'_{N+1}, Z_{N,N+1}, Z'_{N,N+1}, permet d'augmenter la capacité d'échange thermique entre le circuit primaire et le circuit secondaire et donc la capacité de l'appareil thermique 1, 10, 20, 30, 40, 50, 60, 70 à échanger avec une application ou un dispositif extérieur relié au circuit secondaire S_{1,1} S_{1,2}, S_{10,1}, S_{10,2}, S_{20,1}, S_{20,2}, S_{30,1}, S_{30,2}, S_{40,1,N}, S_{40,1,N+1}, S_{50,1}, S_{60,1}, S_{70,1}, S_{70,2}.

Le générateur thermique 1, 10, 20, 30, 40, 50, 60, 70 selon l'invention présente ainsi une optimisation de l'échange thermique entre un circuit primaire, dans lequel un fluide caloporteur se déplace selon un mouvement de va-et-vient, et un circuit secondaire, dans lequel un fluide caloporteur se déplace selon un mouvement unidirectionnel.

Ce but est atteint par l'agencement particulier du circuit primaire qui est divisé à des points de division D en des portions de circuit primaire dans lesquelles le fluide primaire circule dans une seule direction, ces portions de circuit primaire unidirectionnel étant associées à une interface d'échange disposée entre les points de division et dans laquelle le fluide primaire et le fluide secondaire circulent constamment dans des sens opposés l'un par rapport à l'autre.

Cet agencement a pour effet d'augmenter la capacité d'échange thermique entre le circuit primaire et le circuit secondaire et de ce fait d'exploiter ou d'extraire au mieux l'énergie produite dans le coeur du générateur thermique. En outre, et de préférence, l'interface d'échange I_{1,1}, I_{1,2}, I_{10,1}, I_{10,2}, I_{20,1}, I_{20,2}, I_{30,4}, I_{30,2}, I_{40,1}, I_{50,1}, I_{60,1}, I_{70,1}, I_{70,2} est positionnée dans une portion de circuit primaire unidirectionnel directement relié à deux points de division. Cela permet d'optimiser encore l'échange thermique et notamment de réduire le volume de fluide primaire qui ne se trouve pas dans le coeur de l'appareil.

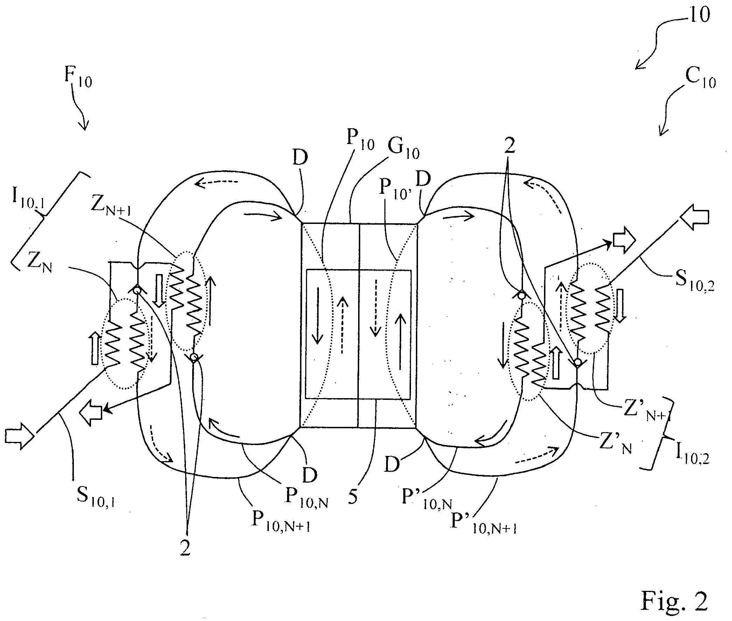

L'appareil thermique 10 représenté à la figure 2 se distingue de celui de la figure 1 uniquement par la configuration du circuit primaire P₁₀, P_{10'}, qui comporte deux boucles fluidiques fermées et dissociées. Cet appareil appelle les mêmes avantages et commentaires que ceux énoncés en regard de l'appareil thermique 1 représenté à la figure 1.

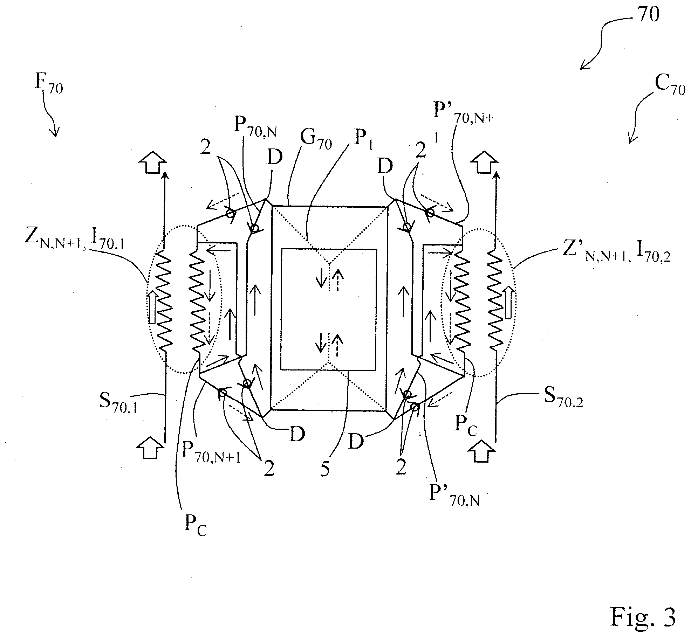

L'appareil thermique 70 selon l'invention représenté à la figure 3 se distingue de celui représenté à la figure 1 par la configuration de ses zones d'échange thermique Z_{N,N+1}, Z'_{N,N+1}. En effet, les portions P_{70,N} et P_{70,N+1}, respectivement P'_{70,N}, et P'_{70,N+1} de circuit primaire unidirectionnel se rejoignent dans une portion commune Pc de circuit primaire unidirectionnel dans laquelle le fluide primaire circule de manière unidirectionnelle grâce à des dispositifs de contrôle 2 du sens de circulation du fluide primaire. Avantageusement, le fluide primaire circulant dans cette portion commune Pc est issu des deux portions correspondantes P_{70,N} et P_{70,N+1}, respectivement P'_{70,N}, et P'_{70,N+1} de circuit primaire unidirectionnel et donc de chaque itération, de sorte que ce fluide primaire s'y déplace de manière continue et unidirectionnelle. L'échange thermique entre le fluide primaire et le fluide secondaire est ainsi optimisé. Le fluide issu de chaque itération est dirigé dans un même circuit d'échangeur, ce qui simplifie l'architecture de l'échangeur thermique.

L'interface d'échange I_{70,1} située du côté froid F₇₀ est formée par un échangeur thermique dont les circuits d'échange intègrent une partie du circuit secondaire S_{70,1} dans lequel circule un fluide secondaire et la portion commune P_{C} des portions P_{70,N}, P_{70,N+1} de circuit primaire unidirectionnel. Dans cette interface d'échange I_{70,1}, les fluides primaire et secondaire circulent dans deux directions opposées. Il en est de même pour l'interface d'échange I_{70,2} située du côté chaud C₇₀. Cette variante de réalisation est particulièrement avantageuse car elle permet de réduire l'encombrement, étant donné qu'une seule portion de circuit primaire, à savoir la portion commune P_{C}, réalise un échange thermique avec le circuit secondaire S_{70,1}, S_{70,2}. En outre, cet échange thermique est réalisé à chaque itération ou changement de sens de circulation du fluide primaire.

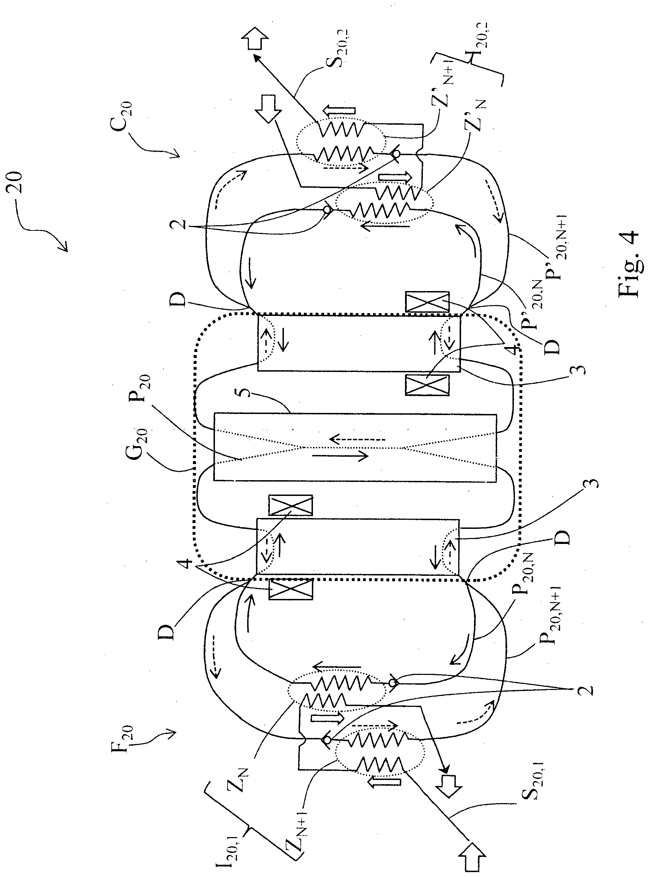

L'appareil thermique 20 représenté à la figure 4 est un appareil thermique magnétocalorique. Il s'agit d'un appareil thermique du type de celui représenté dans la figure 1 dans lequel l'énergie thermique est obtenue dans le coeur G₂₀ de l'appareil thermique 20 par l'exploitation de l'effet magnétocalorique de matériaux dits à effet magnétocalorique. L'appareil thermique 20 illustré comporte à cet effet au moins deux éléments magnétocaloriques 3 représentés schématiquement et traversés de part en part par le fluide primaire du circuit primaire P₂₀.

Chaque élément magnétocalorique 3 peut être constitué par un ou plusieurs matériaux magnétocaloriques aptes à être traversés par le fluide primaire. A cet effet, lesdits matériaux magnétocaloriques peuvent être poreux de sorte que leurs pores forment des passages de fluide débouchants. Ils peuvent également se présenter sous la forme d'un bloc plein dans lequel des minis ou micro-canaux sont usinés ou encore être constitués par un assemblage de plaques, éventuellement rainurées, superposées et entre lesquelles le fluide caloporteur peut s'écouler. Ils peuvent aussi se présenter sous la forme de poudre ou de particules de sorte que les interstices forment des passages de fluide. Toute autre forme de réalisation permettant au fluide primaire d'échanger thermiquement avec chaque élément magnétocalorique 3 peut. bien entendu, convenir. Une configuration particulière peut ainsi comporter un élément magnétocalorique sous forme d'une lame qui n'est pas traversée par le fluide primaire mais qui est en contact thermique avec ledit fluide primaire circulant, par exemple. sur les surfaces supérieure et inférieure de cette lame dans deux sens opposés, pour déboucher à chaque fois au niveau d'une des extrémités de ladite lame formant les extrémités du module, thermique comportant cette lame. Les éléments magnétocaloriques peuvent être sous la forme d'un disque contenant du matériau magnétocalorique sous forme de lames empilées de manière espacée pour former des canaux de passage du fluide primaire.

Un arrangement magnétique 4 comportant des aimants permanents est déplacé par rapport aux éléments magnétocaloriques 3 pour les soumettre alternativement à une variation de champ magnétique et créer alternativement dans les éléments magnétocaloriques 3, une phase d'échauffement et une phase de refroidissement. Cet arrangement magnétique 4 peut également se présenter sous la forme d'un électroaimant alimenté séquentiellement ou par tout autre moyen analogue susceptible de créer une variation de champ magnétique. Les changements de sens de circulation du fluide primaire dans le circuit primaire P₂₀ sont synchronisés avec les phases de magnétisation et démagnétisation des éléments magnétocaloriques 3 de manière à établir un gradient thermique au sein dudit matériau magnétocalorique.

Ce type d'appareil thermique 20 magnétocalorique comporte également un coté froid F₂₀ et un côté chaud C₂₀ situés respectivement à gauche et à droite sur la figure 4. Le circuit primaire P₂₀ se divise du côté froid F₂₀ en deux portions P_{20,N}, P_{20,N+1} de circuit primaire unidirectionnel et du côté chaud C₂₀, en deux autres portions P'_{20,N}, P'_{20,N+1} de circuit primaire unidirectionnel. Les interfaces I_{20,1} et I_{20,2} d'échange thermique côté chaud et côté froid sont destinées à permettre de réaliser un échange thermique optimisé entre le fluide primaire et le fluide secondaire, le fluide primaire et le fluide secondaire y circulant à contre-courant grâce à la présence des dispositifs 2 de contrôle du sens de circulation dans les portions P_{20,N}, P_{20,N+1}, P'_{20,N}, P'_{20,N+1} de circuit primaire unidirectionnel. Ainsi, à chaque phase magnétique et. de ce fait, quelle que soit le sens de circulation du fluide primaire, un échange thermique est réalisé constamment à contre-courant dans les interfaces I_{20,1} et I_{20,2}.

De préférence, et cela est le cas dans tous les appareils thermiques 1, 10, 20, 30, 40, 50, 60 selon l'invention, le point de division D du circuit primaire en plusieurs portions P_{1,N}, P_{1,N+1}, P_{10,N}, P_{10,N+1}, P_{20,N}, P_{20,N+1}, P_{30,N}, P_{30,N+1}, P_{40,N}, P_{40,N+1}, P_{50,N}, P_{50,N+1}, P_{60,N}, P_{60,N+1} de circuit primaire unidirectionnel est situé le plus proche possible du coeur G₁, G₁₀, G₂₀, G₃₀, G₄₀, G₅₀, G₆₀ de l'appareil thermique 1, 10, 20, 30 40, 50, 60, c'est-à-dire de la ou des zones de l'appareil thermique dans laquelle le fluide primaire se charge en énergie thermique. Cela permet de diminuer les volumes dits morts de liquide primaire situés dans les parties du circuit dans lesquelles le fluide primaire se déplace de manière alternée. Pour un générateur thermique 20, 30 magnétocalorique, cette zone correspond idéalement à la zone de sortie du fluide primaire des éléments magnétocaloriques 3.

L'appareil thermique 30 représenté à la figure 5 est également un appareil thermique magnétocalorique. Il se distingue de celui de la figure 4 par le nombre de zones d'échange Z_{N+1}, Z'_{N+1}. En effet, dans cette configuration, seule une portion P_{30,N+1}. P'_{30,N+1} de circuit primaire unidirectionnel comporte une zone d'échange thermique Z_{N+1}, Z'_{N+1}. Une telle configuration peut être implantée lorsqu'il est souhaité de limiter les échanges thermiques avec le fluide secondaire.

Lorsque l'appareil thermique selon l'invention est un appareil thermique magnétocalorique, il peut comprendre un nombre différent d'éléments magnétocaloriques 3. En effet, l'invention n'est pas limitée à l'intégration de seulement deux éléments magnétocaloriques 3 dans un coeur G₂₀, G₃₀ d'appareil thermique magnétocalorique 20, 30, il est possible d'en intégrer seulement un ou plus de deux.

Bien que dans les exemples de réalisation décrits, les appareils thermiques 1, 10, 20. 30 comportent des interfaces I_{1,1}, I_{1,2}, I_{10,1}, I_{10,2}, I_{20,1}, I_{20,2}, I_{30,1}, I_{30,2} d'échange thermique identiques au niveau des côtés chaud et froid, l'invention n'est pas limitée à cette configuration. En effet selon l'application, il est peut être nécessaire d'installer des interfaces I_{1,1}, I_{1,2}, I_{10,1}, I_{10,2}, I_{20,1}, I_{20,2}, I_{30,1}, I_{30,2} qui sont différentes entre le côté chaud et le côté froid.

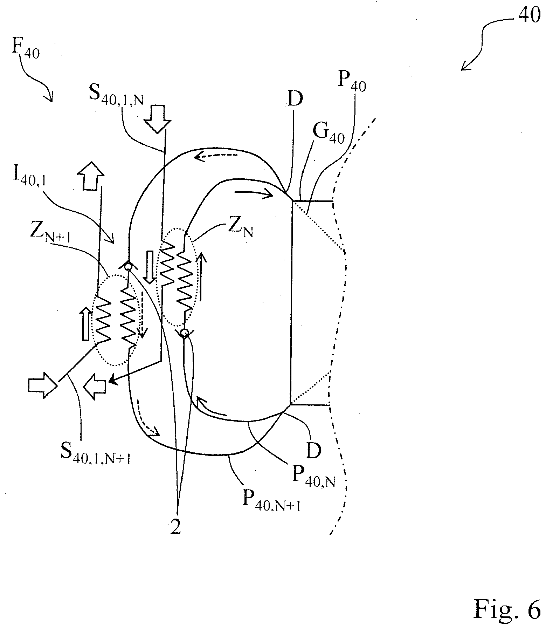

A cet effet, seul le côté froid F₄₀, F₅₀, F₆₀ des appareils thermiques 40, 50, 60 est représenté dans les figures 6, 7, 8, et le côté chaud correspondant peut avoir la même configuration ou une configuration différente.

Ainsi, le côté froid F₄₀ de l'appareil thermique 40 représenté à la figure 6 se distingue de celui des appareils thermiques 1, 10, 20 des figures 1, 2, 4 par la présence de deux circuits secondaires S_{40,1,N} et S_{40,1,N+1} configurés pour réaliser un échange thermique respectivement dans les deux zones d'échange thermique Z_{N} et Z_{N+1}. L'isolation thermique entre les deux zones d'échange thermique Z_{N} et Z_{N+1} est particulièrement adaptée dans cette configuration. Cette variante est transposable également au côté chaud de l'appareil thermique 40. Il est toutefois possible de réaliser le côté froid et le côté chaud d'un tel appareil thermique selon des configurations différentes.

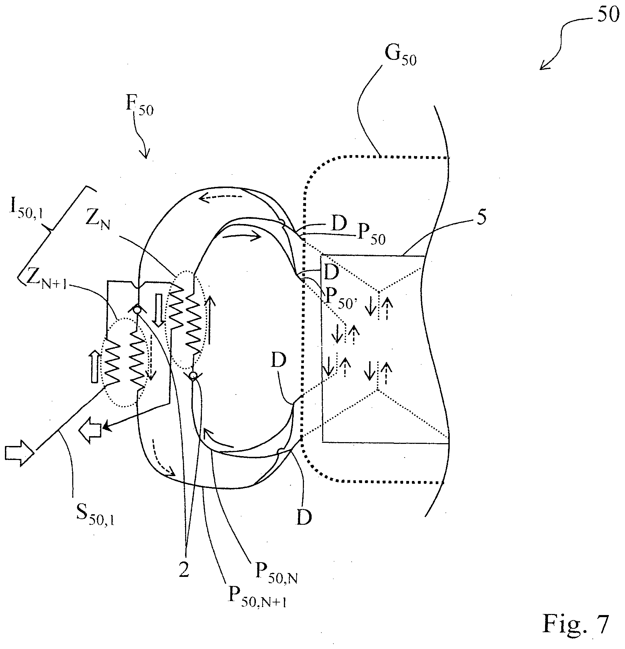

L'appareil thermique 50 représenté à la figure 7 comporte deux circuits primaires P₅₀ et P_{50'}, qui comportent des portions communes P_{50,N}, P_{50,N+1} de circuit primaire unidirectionnel, c'est-à-dire que les fluides primaires des deux circuits primaires P₅₀ et P_{50'} s'y rejoignent. En d'autres termes, l'interface I_{50,1} d'échange thermique est commune aux deux circuits primaires P₅₀ et P_{50'}. Cela permet notamment d'optimiser le volume de l'appareil thermique G₅₀ tout en assurant un échange thermique amélioré. Bien entendu, l'invention ne se limite pas à un ou deux circuits primaires par interface d'échange thermique, plus de deux circuits primaires peuvent être affectés à une seule interface d'échange thermique, selon la puissance thermique de l'appareil thermique et/ou la capacité d'échange nécessaire. Une variante dans laquelle les portions de circuit primaire unidirectionnel sont dissociées, mais disposées dans une zone d'échange thermique commune n'est pas illustrée, est également envisagée dans la présente invention.

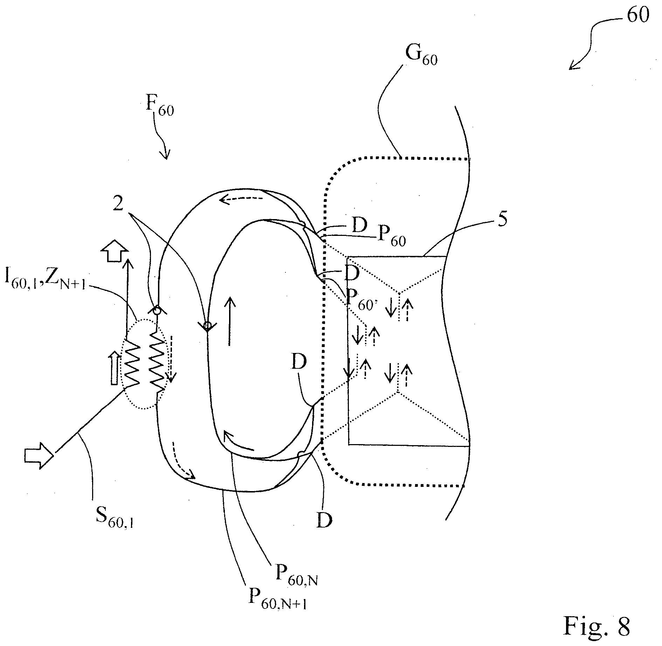

L'appareil thermique 60 représenté à la figure 8 se distingue de celui représenté à la figure 7 par la présence d'une seule zone d'échange thermique Z_{N+1} dans l'interface I_{60,1} : seule une portion P_{60,N+1} de circuit primaire unidirectionnel commune aux deux circuits primaires P₆₀ et P_{60'} comporte une zone d'échange thermique Z_{N+1}. Cette configuration appelle les mêmes remarques que celles énoncées en regard de la figure 5.

### Possibilités d'application industrielle :

Il ressort clairement de cette description que l'invention permet d'atteindre les buts fixés, à savoir proposer un appareil thermique 1, 10, 20, 30, 40, 50, 60 susceptible d'améliorer l'échange thermique entre un fluide primaire dont le déplacement initial est alterné et un fluide secondaire dont le déplacement est unidirectionnel et de préférence continu.

L'appareil thermique 1, 10, 20, 30, 40, 50, 60 selon l'invention peut trouver une application aussi bien industrielle que domestique dans le domaine du chauffage, de la climatisation, du tempérage, refroidissement ou autres, et ce, à des coûts compétitifs et dans un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Appareil thermique (70) comportant un coeur d'appareil (G₇₀) dans lequel est produite l'énergie thermique et comportant au moins un circuit primaire (P₇₀) dans lequel circule un fluide caloporteur dit fluide primaire, ledit fluide primaire étant déplacé dans le circuit primaire (P₇₀) par un dispositif d'entraînement (5) selon un mouvement alterné, et au moins une interface (I_{70,1}, I_{70,2}) d'échange thermique du fluide primaire avec un fluide secondaire circulant de manière unidirectionnelle dans un circuit secondaire (S_{70,1}, S_{70,2}), ledit circuit primaire étant divisé en au moins deux portions (P_{70,N}, P_{70,N+1}, P'_{70,N}, P'_{70,N+1}) de circuit primaire unidirectionnel au niveau de points de division (D) situés en sortie dudit coeur (G₇₀) de l'appareil thermique (70), lesdites au moins deux portions de circuit primaire unidirectionnel étant munies d'un dispositif (2) de contrôle du sens de circulation du fluide primaire paramétré pour y forcer le déplacement unidirectionnel dudit fluide primaire de sorte, qu'à chaque changement de sens de circulation du fluide primaire, ce dernier est déplacé soit dans une portion (P_{70,N}, P'_{70,N}) de circuit primaire unidirectionnel, soit dans l'autre portion (P_{70,N+1}, P'_{70,N+1}) correspondante, chaque portion (P_{70,N}, P_{70,N+1}, P'_{70,N}, P'_{70,N+1}) de circuit primaire unidirectionnel étant délimitée par deux points de division (D) et ladite interface (I_{70,1}, I_{70,2}) étant disposée entre ces deux points de division (D), appareil **caractérisé en ce que** ladite interface (I_{70,1}, I_{70,2}) comporte au moins une zone d'échange thermique (Z_{N,N+1}, Z'_{N,N+1}) dans laquelle le fluide primaire et le fluide secondaire se déplacent de manière unidirectionnelle et à contre-courant l'un par rapport à l'autre dans deux directions opposées, et **en ce que** ladite zone d'échange thermique (Z_{N,N+1}, Z'_{N,N+1}) comporte au moins une portion commune (P_{C}) de circuit primaire unidirectionnel dans laquelle se rejoignent lesdites au moins deux portions (P_{70,N} et P_{70,N+1}, P'_{70,N}, et P'_{70,N+1}) de circuit primaire unidirectionnel, de sorte que le fluide primaire circule dans ladite au moins une portion commune (P_{C}) de manière continue et unidirectionnelle à chaque itération.

2. Appareil thermique, selon la revendication 1, **caractérisé en ce que** ledit dispositif d'entraînement (5) est intégré dans la partie dudit circuit primaire (P₇₀) dans laquelle le fluide se déplace alternativement dans deux sens opposés.

3. Appareil thermique, selon la revendication 2, **caractérisé en ce que** ledit dispositif d'entraînement (5) est intégré dans le coeur (G₇₀) dudit appareil thermique (70).

4. Appareil thermique, selon la revendication 1, **caractérisé en ce que** ledit circuit primaire (P₇₀) est divisé en deux portions de circuit primaire unidirectionnel (P_{70,N}, P_{70,N+1},, P'_{70,N}, P'_{70,N+1}).

5. Appareil thermique, selon l'une des revendications précédentes, **caractérisé en ce qu'**il comporte au moins un élément magnétocalorique (3) traversé de part en part par ledit fluide primaire et formant ledit coeur dudit appareil, et un arrangement magnétique (4) mis en mouvement pour soumettre alternativement ledit élément magnétocalorique (3) à une variation de champ magnétique et créer alternativement dans ledit élément magnétocalorique (3), une phase d'échauffement et une phase de refroidissement.

6. Appareil, selon la revendication 5, **caractérisé en ce que** lesdits points de division (D) sont positionnés au niveau de la zone de sortie du fluide primaire dudit élément magnétocalorique (3).

## Patentansprüche

1. Thermische Vorrichtung (70) mit einem Vorrichtungskern (G₇₀) in welchem die thermische Energie erzeugt wird und der zumindest einen Primärkreislauf (P₇₀) beträgt, in dem ein als Primärfluid bezeichnetes Wärmeübertragungsfluid zirkuliert, wobei besagtes Primärfluid in Primärkreis (P₇₀) durch eine Antriebsvorrichtung (5) in einer abwechselnden Bewegung bewegt wird, und zumindest eine Schnittstelle (I_{70,1}, I_{70,2}) für den Wärmeaustausch des Primärfluids mit einem Sekundärfluid, das unidirektional in einem Sekundärkreislauf (S_{70,1}, S_{70,2}) zirkuliert, wobei besagter Primärfluid an am Auslass von besagtem Kern (G₇₀) von thermischer Vorrichtung (70) befindlichen Aufteilungspunkten (D) in zumindest zwei unidirektionale Primärkreislauf-Abschnitte (P_{70,N}, P_{70,N+1}, P'_{70,N}, P'_{70,N+1}) aufgeteilt ist, wobei besagte zumindest zwei unidirektionale Primärkreislauf-Abschnitte mit einer Vorrichtung (2) zur Steuerung der Zirkulationsrichtung des Primärfluids ausgestattet sind, die parametriert ist, um die unidirektionale Zirkulation von besagtem Primärfluid in diesen so zu forcieren, dass bei jeder Änderung der Zirkulationsrichtung des Primärfluids dieser entweder in einem Abschnitt (P_{70,N}, P'_{70,N}) des unidirektionalen Primärkleislaufs oder in dem anderen entsprechenden Abschnitt (P_{70,N+1}, P'_{70,N+1}) bewegt wird, wobei jeder Abschnitt (P_{70,N}, P_{70,N+1,} P'_{70,N}, P'_{70,N+1}) des unidirektionalen Primärkleislaufs durch zwei Aufteilungspunkte (D) begrenzt ist, und besagte Schnittstelle (I_{70,1}, I_{70,2}) zwischen diesen beiden Aufteilungspunkten (D) angeordnet ist, **dadurch gekennzeichnete** Vorrichtung, dass besagte Schnittstelle (I_{70,1}, I_{70,2}) zumindest eine Wärmeaustauschzone (Z_{N,N+1}, Z'_{N,N+1}) beträgt, in der das Primärfluid und das Sekundärfluid sich unidirektional und im Gegenstrom zueinander in zwei entgegen gesetzte Richtungen bewegen, und dadurch, dass besagte Wärmeaustauschzone (Z_{N,N+1}, Z'_{N,N+1}) zumindest einen gemeinsamen unidirektionalen Primärkreislauf-Abschnitt (P_{C}) betragen, in dem besagte zumindest zwei unidirektionale Primärkreislauf-Abschnitte (P_{70,N} und P_{70,N+1}, P'_{70,N}, und P'_{70,N+1}) treffen, so dass das Primärfluid bei jeder Iteration in besagtem zumindest einem gemeinsamen Abschnitt (P_{C}) kontinuierlich und unidirektional zirkuliert.

2. Thermische Vorrichtung nach Anspruch 1, **dadurch gekennzeichnet, dass** besagte Antriebsvorrichtung (5) in dem Teil von besagtem Primärkreislauf (P₇₀) integriert ist, in dem sich das Fluid abwechselnd in zwei entgegen gesetzte Richtungen bewegt.

3. Thermische Vorrichtung nach Anspruch 2, **dadurch gekennzeichnet, dass** besagte Antriebsvorrichtung (5) in dem Kern (G₇₀) von besagter thermischen Vorrichtung (70) integriert ist.

4. Thermische Vorrichtung nach Anspruch 1, **dadurch gekennzeichnet, dass** besagter Primärkreislauf (P₇₀) in zwei unidirektionale Primärkreislauf-Abschnitte (P_{70,N}, P_{70,N+1},, P'_{70,N}, P'_{70,N+1}) aufgeteilt ist.

5. Thermische Vorrichtung nach einem beliebigen der vorhergehenden Ansprüche, **dadurch gekennzeichnet, dass** sie zumindest ein von besagtem Primärfluid quer durchflossenes magnetokalorisches Element (3) beträgt, welches den Kern von besagter Vorrichtung bildet, und eine magnetische Anordnung (4), die in Bewegung versetzt wird, um besagtes magnetokalorisches Element (3) abwechselnd einer Variation des Magnetfelds auszusetzen und abwechselnd in besagtem magnetokalorischen Element (3) eine Erwärmungsphase und eine Abkühlungsphase zu erzeugen.

6. Vorrichtung nach Anspruch 5, **dadurch gekennzeichnet, dass** besagte Aufteilungspunkte (D) sich im Bereich der Austrittzone des Primärfluids von besagtem magnetokalorischen Element (3) befinden.

## Claims

1. Thermal apparatus (70) comprising an apparatus core (G₇₀) in which the thermal energy is produced and comprising at least one primary circuit (P₇₀) in which a heat transfer fluid called primary fluid is circulating, said primary fluid being moved in the primary circuit (P₇₀) in a reciprocating movement by a displacement device (5), and at least one heat exchange interface (I_{70,1}, I_{70,2}) of the primary fluid with a secondary fluid that circulates unidirectionally in a secondary circuit (S_{70,1}, S_{70,2}), said primary circuit being divided into at least two unidirectional primary circuit portions (P_{70,N}, P_{70,N+1}, P'_{70,N}, P'_{70,N+1}) at the level of division points (D) located at the outlet of said core (G₇₀) of thermal apparatus (70), said at least two unidirectional primary circuit portions being provided with a device (2) controlling the flow direction of the primary fluid, parameterized to force the unidirectional flow direction of said primary fluid so that, at every flow direction change of the primary fluid, the latter is displaced either in one portion (P_{70,N}, P'_{70,N}) of the unidirectional primary circuit or in the other corresponding portion (P_{70,N+1}, P'_{70,N+1}), every portion of unidirectional primary circuit (P_{70,N}, P_{70,N+1}, P'_{70,N}, P'_{70,N+1}) being delimited by two division points (D) and said interface (I_{70,1}, I_{70,2}) being arranged between two division points (D), **characterized in that** said interface (I_{70,1}, I_{70,2}) comprises at least one heat exchange zone (Z_{N,N+1}, Z'_{N,N+1}) in which the primary fluid and the secondary fluid flow unidirectionally and countercurrent with respect to each other in two opposite directions, and **in that** said heat exchange zone (Z_{N,N+1}, Z'_{N,N+1}) comprises at least one common unidirectional primary circuit portion (PC), in which the at least two portions of unidirectional primary circuit (P_{70,N} and P_{70,N+1}, P'_{70,N} and P'_{70,N+1}) come together, so that the primary fluid flows in said at least one common portion (PC) continuously and unidirectionally at each iteration.

2. Thermal apparatus according to claim 1, **characterized in that** said displacement device (5) is integrated in the section of said primary circuit (P₇₀) in which the fluid moves alternately in two opposite directions.

3. Thermal apparatus according to claim 2, **characterized in that** said displacement device (5) is integrated in the core (G₇₀) of said thermal apparatus (70).

4. Thermal apparatus according to claim 1, **characterized in that** said primary circuit (P₇₀) is divided in two unidirectional primary circuit portions (P_{70,N}, P_{70,N+1}, P'_{70,N}, P'_{70,N+1}).

5. Thermal apparatus according to any of the previous claims, **characterized in that** it comprises at least one magnetocaloric element (3) forming the core of said apparatus and through which passes said primary fluid, and a magnetic arrangement (4) put into motion to subject alternately said magnetocaloric element (3) to a magnetic field variation and create alternately in said magnetocaloric element (3) a heating phase and a cooling phase.

6. Apparatus according to claim 5, **characterized in that** said division points (D) are positioned at the level of the primary fluid outlet area of said magnetocaloric element (3).
